(19) Europäisches Patentamt
European Patent Office
Office européen des brevets

(11) EP 2 279 404 B1

(12) EUROPÄISCHE PATENTSCHRIFT

(45) Veröffentlichungstag und Bekanntmachung des Hinweises auf die Patenterteilung:
01.08.2012 Patentblatt 2012/31

(51) Int Cl.:
G01N 23/201 (2006.01)   G01N 15/02 (2006.01)

(21) Anmeldenummer: 09749860.4

(22) Anmeldetag: 20.05.2009

(86) Internationale Anmeldenummer:
PCT/EP2009/056110

(87) Internationale Veröffentlichungsnummer:
WO 2009/141370 (26.11.2009 Gazette 2009/48)

(54) **VORRICHTUNG UND VERFAHREN ZUR ANALYSE VON NANOPARTIKELN MITTELS KOPPLUNG VON FELDFLUSS-FRAKTIONIERUNG UND RÖNTGENKLEINWINKELSTREUUNG**

DEVICE AND METHOD FOR ANALYZING NANOPARTICLES BY COMBINATION OF FIELD-FLOW FRACTIONATION AND X-RAY SMALL ANGLE SCATTERING

DISPOSITIF ET PROCEDE POUR ANALYSER DES NANOPARTICULES PAR COUPLAGE DE FRACTIONNEMENT PAR COURANT D'EXCITATION ET DISPERSION DE RAYONS X D'ANGLE MINIATURE

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR

(30) Priorität: 21.05.2008 DE 102008024739

(43) Veröffentlichungstag der Anmeldung:
02.02.2011 Patentblatt 2011/05

(73) Patentinhaber: Anton Paar GmbH
8054 Graz (AT)

(72) Erfinder: THÜNEMANN, Andreas
10407 Berlin (DE)

(74) Vertreter: Gulde Hengelhaupt Ziebig & Schneider
Patentanwälte - Rechtsanwälte
Wallstrasse 58/59
10179 Berlin (DE)

(56) Entgegenhaltungen:

• MATHEW, E; MIRZA, A; MENHART, N: "Liquid-chromatography-coupled SAXS for accurate sizing of aggregating proteins" J. SYNCHROTRON RAD., Bd. 11, 2004, Seiten 314-318, XP008114190
• MÜLLER, J; LÖTHMAN, P; MEYER, DC: "Small angle X-ray transmission characterisation of nanometersized Pt-clusters in a ceramic thin film on metal substrate" CRYST. RES. TECHNOL., Bd. 40, Nr. 1/2, 1. Januar 2005 (2005-01-01), Seiten 177-181, XP002553091
• PIGNON F; BELINA G; NARAYANAN T; PAUBEL X; MAGNIN A; GÉSAN-GUIZIOU G: "Structure and rheological behavior of casein micelle suspensions during ultrafiltration process" J CHEM PHYS., Bd. 121, Nr. 16, 22. Oktober 2004 (2004-10-22), Seiten 8138-8146, XP008114176
• GEHRKE, R: "Upgrade of the SAXS Instrument at Beamline BW4" HASYLAB ANNUAL REPORT PART I, [Online] 2004, Seiten 1-6, XP002553331 Gefunden im Internet: URL:http://hasyweb.desy.de/science/annual_ reports/2004_report/part1/intern/13218.pdf > [gefunden am 2009-11-03]
• BERGMANN A ET AL: "Improvement of SAXS measurements on Kratky slit systems by Gobel mirrors andimaging-plate detectors" JOURNAL OF APPLIED CRYSTALLOGRAPHY, COPENHAGEN, DK, Bd. 33, Nr. 2, 1. Juni 2000 (2000-06-01), Seiten 869-875, XP009089412 ISSN: 0021-8898
• FRAUNHOFER W ET AL: "ASYMMETRICAL FLOW FIELD-FLOW FRACTIONATION AND MULTIANGLE LIGHT SCATTERING FOR ANALYSIS OF GELATIN NANOPARTICLE DRUG CARRIER SYSTEMS" ANALYTICAL CHEMISTRY, AMERICAN CHEMICAL SOCIETY. COLUMBUS, US, Bd. 76, Nr. 7, 1. April 2004 (2004-04-01), Seiten 1909-1920, XP001196727 ISSN: 0003-2700 in der Anmeldung erwähnt

- **FISCHETTI R ET AL: "The BioCAT undulator beamline 18ID: a facility for biological non-crystalline diffraction and X-ray absorption spectroscopy at the Advanced Photon Source", JOURNAL OF SYNCHROTRON RADIATION, WILEY-BLACKWELL MUNKSGAARD, DK, vol. 11, 1 January 2004 (2004-01-01), pages 399-405, XP007918592, ISSN: 0909-0495, DOI: DOI: 10.1107/S0909049504016760**
- **"How to Collect Complete Scattering Patterns ED - Stribeck N", 16 May 2007 (2007-05-16), X-RAY SCATTERING OF SOFT MATTER, SPRINGER, DE, PAGE(S) 26, XP007918587, ISBN: 978-3-540-69855-5**
- **POKRIC B ET AL: "A double area detector system for simultaneous small and wide-angle X-ray scattering", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 477, no. 1-3, 21 January 2002 (2002-01-21), pages 329-334, XP004345560, ISSN: 0168-9002, DOI: DOI: 10.1016/S0168-9002(01)01856-3**
- **YING-HUANG LAI ET AL: "An instrument for time-resolved and anomalous simultaneous small- and wide-angle X-ray scattering (SWAXS) at NSRRC", JOURNAL OF APPLIED CRYSTALLOGRAPHY, COPENHAGEN, DK, vol. 39, no. Part 6, 1 December 2006 (2006-12-01), pages 871-877, XP007918591, ISSN: 0021-8898, DOI: DOI:10.1107/S0021889806034686**

**Beschreibung**

Die Erfindung betrifft eine Vorrichtung und ein Verfahren zur Analyse von Nanopartikeln, wobei die Nanopartikel zuerst in Abhängigkeit ihrer Partikelgröße fraktioniert und daran anschließend analysiert werden.

Nanopartikel spielen in der Entwicklung der Nanotechnologie eine zentrale wirtschaftliche Rolle. Dies betrifft klassische Bereiche, wie die Kolloid- und Polymerchemie, sowie neue Entwicklungen mit wirtschaftlichen Anwendungen, deren Spanne sich von Solarzellen über organspezifische Drug-Delivery-Systeme, der Gentherapie bis hin zur Krebsdiagnostik erstreckt.

Parallel zu ihrem Nutzen werden zunehmend potentielle Gefahren für die menschliche Gesundheit und Umwelt durch Nanopartikel sichtbar und kontrovers diskutiert. Eine wesentliche Grundlage für eine wissenschaftlich-rational begründbare Einschätzung des Gefahrenpotentials von Nanopartikeln ist es, diese hinsichtlich zentraler physikalisch-chemischer Größen zu analysieren. Gleiches gilt für die systematische technische Weiterentwicklung der Anwendung von Nanopartikeln in technischen Verfahren und Bauteilen, Katalysatoren, Lebensmittelzusätzen und pharmazeutischen Formulierungen. Von besonderer Bedeutung sind insbesondere Nanopartikel mit Partikeldurchmessern von unter 100 nm.

Es hat daher nicht an Versuchen gefehlt, Verfahren für die Analytik von Nanopartikeln zu entwickeln. Zwei Verfahren haben sich dabei im Wesentlichen durchgesetzt, und zwar die Elektronenmikroskopie und die dynamische Lichtstreuung.

Bildgebende Verfahren, wie die Raster- und Transmissions-Elektronenmikroskopie werden extensiv in der Analytik von Nanopartikeln eingesetzt. Ihre inhärenten Nachteile sind die eher zufällige Auswahl einer limitieren Anzahl an Nanopartikeln anstelle einer für die gesamte Probe repräsentativen Auswahl, die zeitaufwändige Proben-Präparation und die hohe Wahrscheinlichkeit systematische Messartefakte zu produzieren. Bekannt ist beispielsweise, dass übliche Stabilisatoren in Form von polymeren Tensiden die zu untersuchenden Nanopartikel in den Analysen vollständig überdecken können. Weiterhin sind in-situ-Messungen mit der Elektronenmikroskopie nicht möglich, da sich die Nanopartikel für die Analyse im Vakuum befinden müssen.

Methoden wie die dynamische oder statische Lichtstreuung ergeben Mittelwerte bzw. Summenparameter über die gesamte Probe. Dies führt bei monodispersen Proben oder Proben mit enger Größenverteilung (Standardabweichung kleiner 10 %) zu sehr guten Ergebnissen. Von Vorteil ist dabei, dass die erhaltenen Ergebnisse für die gesamte Probe repräsentativ sind.

Die dynamische Lichtstreuung ist die dominierende Technik für die Analyse von Nanopartikeln im Bereich von 100 bis 500 nm. Sie arbeitet nicht-invasiv und zerstörungsfrei. Gelöste oder dispergierte Nanopartikel können innerhalb weniger Minuten vermessen werden. Das zentrale Problem der dynamischen Lichtstreuung liegt allerdings in dem zugrunde liegenden physikalischen Messprinzip. Aus der eigentlichen Messgröße, einem sogenannten effektiven z-Mittelwert des Diffusionskoeffizienten der Nanopartikel, werden Aussagen über die Partikelgröße abgeleitet.

Bei sphärischen Nanopartikeln ist der Diffusionskoeffizient umgekehrt proportional zum Radius. Problematisch wird die Größenbestimmung mittels dynamischer Lichtstreuung allerdings, wenn Spuren von Staub in der Probe vorliegen oder Anteile der Nanopartikel aggregiert, sozusagen verklumpt vorliegen, was sehr häufig der Fall ist. Darüber hinaus ist die dynamische Lichtstreuung nicht in der Lage, Aussagen über weitere physikalisch-chemische Parameter zu treffen, so dass sich ihre Anwendung auf die Bestimmung der Masse der Nanopartikel beschränkt.

Zudem ist eine Reihe von Annahmen nötig, wenn Größenverteilungen vorliegen, wenn also die Nanopartikel keine einheitliche Größe aufweisen. Dann sind die Analysenergebnisse entweder unbrauchbar, stellen eine grobe Abschätzung dar oder sind mehrdeutig. Daher beschränkt die ISO Norm 13321 die normgerechte Anwendbarkeit der dynamischen Lichtstreuung auch auf Nanopartikel mit recht einheitlicher Größe. Üblicherweise ist die sogenannte Kumulantenanalyse (Frisken, B. J., Applied Optics 2001, 40, (24), 4087-4091) nur für einen Polydispersitätsindex kleiner als 0,1 zuverlässig, der in der analytischen Praxis vergleichsweise selten vorliegt. Daher ist eine Fraktionierung der zu analysierenden Proben zwingend notwendig, wenn die Aufgabe besteht, detaillierte Informationen über die Größenverteilung zu ermitteln.

Fraunhofer W. et al. beschreiben erstmals ein solches Verfahren bei dem Drug-Carrier auf Basis von Gelatine-Nanopartikel zuerst mittels einer Feldfluss-Fraktionierung aufgetrennt und anschließend mittels multi-angle light scattering (MALS) analysiert werden (Fraunhofer W. et al., Anal. Chem., 76 (7), 1909-1920, 2004).

Allerdings stößt die dynamische Lichtstreuung auf Grund der Relation der zur Messung verwendeten Wellenlänge zur Partikelgröße an ihre Grenzen, wenn die Nanopartikel kleiner als 100 nm sind. Zudem ist es mittels der dynamischen Lichtstreuung nicht möglich, neben der Größe der Nanopartikel weitere physikalisch-chemische Parameter, wie Form, Struktur oder Oberflächenbeschaffenheit zu analysieren.

Ein Messverfahren, das mit einer deutlich kürzeren Wellenlänge arbeitet, ist die Röntgenkleinwinkelstreuung. Bei der Röntgenkleinwinkelstreuung handelt es sich um ein Verfahren, das auch bereits für die Bestimmung der Größe, Gestalt, Zahl und inneren Struktur von Nanopartikeln in Lösung verwendet wird. Allerdings ist die Dateninterpretation oft mehrdeutig, beispielsweise wenn die Nanopartikel polydispers vorliegen oder aber unterschiedliche Gestalt besitzen, z. B. kugel- und zylinder-symmetrische Nanopartikel in einer Probe vorkommen. Dies liegt darin begründet, dass die Röntgenkleinwinkelstreuung automatisch die Streubeiträge von allen Nanopartikeln in der Lösung zeitlich und räumlich mittelt, also repräsentativ für die gesamte Probe ist.

Mathew et al. beschreiben die Kombination von Fraktionierung mit Röntgenkleinwinkelsteurung, wobei die mittels Fast Protein Liquid Chromatography fraktionierten Nanopartikel Kontinuerlich durch eine Flußzalle strömen und mit mittels eines Spaltkollimators Kollierter Rüntgunstrahlung untersicht werden (Mathew et al. J. Synchrotron Rad. (2004), 11, 314-318).

Da technisch relevante Nanopartikel in aller Regel nicht monodispers sondern polydispers vorliegen, müssen zu ihrer Charakterisierung aufwändige Analysen mit unterschiedlichen Verfahren durchgeführt werden, die oft zu widersprüchlichen Resultaten gelangen.

Es besteht somit das Bedürfnis, ein Verfahren zur Verfügung zu stellen, bei dem neben der Größe von Nanopartikeln weitere physikalisch-chemische Parameter zuverlässig analysiert werden können und zudem eine Messung auch bei Nanopartikeln kleiner 100 nm möglich ist. Dabei sollen die Messungen in Lösung durchführbar sein und die Messzeiten möglichst kurz gehalten werden.

Überraschenderweise ist es gelungen, die im Stand der Technik beschriebenen Probleme zu überwinden und ein Verfahren mit dem Merkmal des Anspruchs 1 zur Verfügung zu stellen, das es ermöglicht, Nanopartikel an Hand ihrer Partikelgröße aufzutrennen und anschließend mittels Röntgenkleinwinkelstreuung zu analysieren. Bevorzugte Ausgestaltungen des Verfahrens sind in den Unteransprüchen charakterisiert.

Die Erfindung betrifft ein Verfahren zur Analyse von Nanopartikeln umfassend eine Fraktionierung der zu analysierenden Nanopartikel in Abhängigkeit ihrer Partikelgröße und eine daran anschließende Analyse, wobei die Nanopartikel mittels Röntgenkleinwinkelstreuung analysiert werden. Dabei ist das Problem zu geringer Streuintensitäten in fraktionierten Nanopartikelproben derart gelöst worden, dass die Analyse mittels Röntgenkleinwinkelstreuung die Kollimation von Röntgenstrahlung mittels eines Spaltkollimators auf die zu analysierenden Nanopartikel umfasst, sowie das Analysieren der Nanopartikel unter Verwendung eines Detektor-Probenabstandes von weniger als 50 cm.

Ferner können die Streuintensitäten dadurch erhöht werden, dass eine intensive Röntgenstrahlung, vorzugsweise Synchrotronstrahlung, mit einer für Nanopartikel optimierten Röntgenkleinwinkelstreuungsanlage kombiniert wird. Auf diese Weise können ausreichende Streuintensitäten in Messzeiten von bis zu unter einer Sekunde erhalten werden.

Das erfindungsgemäße Verfahren ermöglicht eine zeitsparende und präzise Charakterisierung von dispergierten Nanopartikeln aus chemisch-technischen Prozessen. Dabei ist das Verfahren immer dann besonders vorteilhaft für analytische Zwecke anwendbar, wenn Mischungen von Nanopartikeln mit unterschiedlicher Größe, Form und/oder Struktur untersucht werden sollen.

Im Rahmen dieser Erfindung werden unter Nanopartikeln Partikel jeglichen Materials verstanden, deren Partikelgröße im Bereich von 1 bis 300 nm, vorzugsweise von 1 bis 100 nm und besonders bevorzugt von 1 bis 50 nm liegt. Dabei können die Nanopartikel aus synthetischen und/oder natürlichen Materialien bestehen. Vorzugsweise können die Nanopartikel als einzelne Partikel oder als Aggregate, Verbindungen oder Komposite vorliegen. Insbesondere sind Nanopartikel auch einzelne Moleküle, d.h. Makromoleküle, oder Aggregate mehrerer niedermolekularer Substanzen. Die Nanopartikel können jede beliebige Form aufweisen. Unter natürlichen Materialien sollen insbesondere Peptide und Proteine verstanden werden.

Erfindungsgemäß werden die Nanopartikel an Hand ihrer Diffusionskoeffizienten aufgetrennt. Dabei kommt eine Fraktionierung mittels einer Methode aus der Gruppe der Feldfluss-Fraktionierungen zum Einsatz. Die Feldfluss-Fraktionierungsmethoden ermöglichen eine schonende Fraktionierung von Nanopartikeln nach ihrer Größe, wobei im Vergleich z. B. mit der Gelpermeationschromatographie, der Hochdruckftüssigkeitschfomatographie (HPLC) oder der analytischen Ultrazentrifuge nur geringe Scherkräfte auf die Nanopartikel ausgeübt werden. Dies gewährleistet, dass die Nanopartikel durch die Fraktionierung nicht geschädigt oder gar zerstört werden. Somit ist die Feldfluss-Fraktionierung auch für empfindliche Nanopartikel, wie beispielsweise Biomoleküle, insbesondere Proteine, geeignet. Vorzugsweise wird erfindungsgemäß eine asymmetrische Feldfluss-Fraktionierung durchgeführt.

Ein weiterer Gegenstand der Erfindung ist eine Vorrichtung zur Durchführung des erfindungsgemäßen Verfahrens mit den Merkmalen des unabhängigen Anspruchs 8 beschrieben. Bevorzugte Ausführungsformen sind in den Unteransprüchen charakterisiert.

Die Erfindung betrifft eine Vorrichtung zur Analyse von Nanopartikeln umfassend eine Einrichtung zur Fraktionierung und eine nachgeschaltete Einrichtung zur Analyse von Nanopartikeln, wobei die Einrichtung zur Fraktionierung eine Einrichtung zur Feld-Fluss Fraktionierung an Hand der Partikelgröße und die Einrichtung zur Analyse eine Einrichtung zur Messung von Röntgenkleinwinkelstreuung ist. Der Detektor-Proben-Abstand in der Einrichtung zur Messung von Röntgenkleinwinkelstreuung ist dabei kleiner als 50 cm und die Einrichtung zur Messung von Röntgenkleinwinkelstreuung weist einen Spaltkollimator auf.

Vorzugsweise ist der Detektor-Probenabstand weniger als 30cm.

Die erfindungsgemäße Optimierung der Einrichtung zur Messung von Röntgenkleinwinkelstreuung auf die Nanopartikelanalyse beinhaltet somit, den Detektor-Proben-Abstand deutlich zu verkleinern. Da die Streuintensität mit dem Quadrat der Entfernung abfällt, ist diese deutliche Verkleinerung gegenüber den üblichen Detektor-Proben-Abständen in Röntgenkleinwinkelstreuungsanlagen von ca. 1 bis 2 m von ausschlaggebender Bedeutung für die Anwendbarkeit der Röntgenkleinwinkelstreuung in der Nanopartikelanalyse.

Durch den Spaltkollimator im Vergleich zum üblicherweise verwendeten Punktkollimator wird zudem ein größeres Probenvolumen beleuchtet und ebenfalls eine Erhöhung der Streuintensität erreicht, was eine weitere Reduzierung der Messzeit erlaubt.

Bei Verwendung des Spaltkollimators setzt sich das erhaltene Signalmuster aus einer Überlagerung benachbarter Punktsignalmuster zusammen und faltet sich sozusagen selbst. Das dadurch entstehende "smearing" kann zur Auswertung der Daten mittels einer geeigneten Dekonvolutions-Software wieder herausgerechnet werden.

Erfindungsgemäß ist die Einrichtung zur Fraktionierung an Hand der Partikelgröße eine Einrichtung zur Fraktionierung an Hand des Diffusionskoeffizienten.

Auf Grund der schonenden Auftrennung wird eine Einrichtung zur Feldfluss-Fraktionierung eingesetzt.

In einer besonders bevorzugten Ausführungsform weist die Einrichtung zur Messung der Röntgenkleinwinkelstreuung eine Durchflusskapillare auf. Diese ermöglicht es, der Röntgenkleinwinkelstreuungsanlage kontinuierlich das vorher aufgetrennte Probenmaterial zuzuführen und wieder abzuführen. Insbesondere entfallen dadurch im Vergleich zu üblichen Einrichtungen zur Messung von Röntgenkleinwinkelstreuung das Einschmelzen der Probe in einer geeigneten Messkapillare sowie die Zeiten, die zum wiederholten Aufbau des Vakuums in der Messkammer benötigt werden.

In einer weiteren Ausführungsform kann eine Röntgenquelle der Einrichtung zur Messung von Röntgenkleinwinkelstreuung eine beliebige Röntgenquelle sein, die energiereiche Röntgenstrahlung emittiert. Vorzugsweise weist die Einrichtung zur Messung von Röntgenkleinwinkelstreuung ein Mittel zur Monochromatisierung von Röntgenstrahlen auf. Mittel zur Monochromatisierung sind dem Fachmann bekannt. Erfindungsgemäß wird vorzugsweise ein Goebelspiegel zur Monochromatisierung verwendet. Vorteilhafterweise wird durch die erfindungsgemäße Kollimation des Röntgenstrahls mittels des Goebelspiegels eine bis zu 10fache Intensitätssteigerung erreicht.

In einer weiteren vorteilhaften Ausgestaltung der Erfindung ist zwischen der Einrichtung zur Fraktionierung der Nanopartikel und der Einrichtung zur Messung von Röntgenkleinwinkelstreuung ein UV-Detektor positioniert.

Mittels der erfindungsgemäßen Vorrichtung ist es möglich, kontinuierlich Partikelproben zu vermessen. Somit zeichnet sich das erfindungsgemäße Verfahren insbesondere dadurch aus, dass die Fraktionierung der Nanopartikel und/oder die anschließende Analyse kontinuierlich erfolgen. Das Probenmaterial, vorzugsweise polydisperse Nanopartikel, werden in der Einrichtung zur Fraktionierung aufgetrennt und automatisch an die Einrichtung zur Messung der Röntgenkleinwinkelstreuung weitergleitet. Dabei erreicht das Probenmaterial die Röntgenkleinwinkelstreuungsanlage fraktionsweise und kann nach der Analyse zusammen mit dem Flussmittel fraktionsweise gesammelt oder verworfen werden. Während der Analyse der letzten Fraktion kann bereits in der Einrichtung zur Fraktionierung die nächste Probe aufgetrennt werden.

Der zusätzliche UV-Detektor ist insbesondere für Reihenuntersuchungen von Vorteil. Bei UV-aktivem Probenmaterial, wie proteinhaltigen oder gefärbten Nanopartikeln, werden die Probenfraktionen am UV-Detektor detektiert bevor sie die Kapillare in der Röntgenkleinwinkelstreuungsanlage erreichen. Dieses Signal kann beispielsweise mit einem Fraktionssammler gekoppelt werden, der die analysierten Fraktionen nach der Röntgenkleinwinkelstreuungsanlage sammelt. Die Zeitverzögerung zwischen dem Signal am UV-Detektor und dem Streusignal aus der Röntgenkleinwinkelstreuungsanlage muss dabei berücksichtigt werden und kann durch eine geeignete Wahl der Flussgeschwindigkeit im System und der Flussstrecke den individuellen Versuchsbedingungen angepasst werden.

Mit dem erfindungsgemäßen Verfahren ist es möglich, verschiedene physikalisch-chemische Parameter der Nanopartikel zu untersuchen. Vorzugsweise werden die Größe, Masse, Form, Anzahl, stoffliche Zusammensetzung, innere Struktur und/oder Beschichtung der Nanopartikel untersucht. Dabei können mit einem geringen Zeitaufwand mehrere Parameter gleichzeitig untersucht werden. Darin ist einer der großen Vorteile gegenüber anderen Verfahren, wie beispielsweise der Lichtstreuung, zu sehen. Gerade im Bereich der Biotechnologie ist häufig die Analyse der Größe der Partikel nicht ausreichend. Beispielsweise können denaturierte Proteine in der dynamischen Lichtstreuung dieselben Signale ergeben, wie Proteindimere. Bei proteinbasierten Arzneimitteln, wären allerdings denaturierte Proteine unwirksam, so dass die Strukturaufklärung einen wichtigen Parameter in der Analyse von Biopartikeln darstellt. Insbesondere ist es auch möglich, Aussagen über die innere Struktur der Nanopartikel, beispielsweise Kern-Schale-Strukturen, und ihre Stabilisierung (sterisch, elektrostatisch etc.) zu machen.

In einer weiteren Ausgestaltung des erfindungsgemäßen Verfahrens werden zudem Wechselwirkungen zwischen den Nanopartikeln analysiert, insbesondere das Harte-Kugel-Potential (hart sphere potential), das abgeschirmte-Coulomb-Potential (screened Coulomb potential) oder das 2-Yukava-Potential.

Vorzugsweise wird für das erfindungsgemäße Verfahren hochenergetische, monochromatische Röntgenstrahlung verwendet. Vorzugsweise liegt die Photonenenergie im Bereich von 5 keV bis 80 keV, besonders bevorzugt im Bereich von 8 keV bis 15 keV. In einer besonders bevorzugten Ausführungsform wird Synchrotronstrahlung zur Messung der Röntgenkleinwinkelstreuung verwendet.

Überraschenderweise war Synchrotronstrahlung für das erfindungsgemäße Verfahren einsetzbar. Üblicherweise arbeiten Synchrotrons mit Punktkollimatoren, so dass die erreichte Streuintensität für die Analyse von Nanopartikeln zu gering ist. Erst in Verbindung mit der erfindungsgemäßen Vorrichtung kann Synchrotronstrahlung sinnvoll eingesetzt werden. Vorteilhafterweise liegt die Synchrotronstrahlung bereits monochromatisch vor, so dass der Schritt der Monochromatisierung, der mit einem Verlust an Intensität verbunden ist, entfallen kann. Die vorzugsweise verwendete Röntgenstrahlung weist eine Wellenlänge von $\lambda = 0{,}154$ nm auf.

Die Verwendung von Röntgenstrahlung hat zudem den Vorteil, dass die sonst, beispielsweise bei der Dynamischen Lichtstreuung auftretende Problematik von Verunreinigungen nicht mehr zum Tragen kommt. Bei Messverfahren, die mit sichtbarem Licht arbeiten, verfälschen Stäube und ähnliche Verunreinigungen das Messergebnis in großem Maße. Daher werden an die Probenvorbereitung hohe Anforderungen gestellt. Insbesondere kommen zur Entfernung von Verunreinigungen Zentrifugations- und Filtrationsverfahren zum Einsatz. Neben dem erhöhten Zeitaufwand besteht dabei das Problem, dass während der Aufreinigungsschritte auch Probenmaterial verloren gehen kann bzw. die Größen- oder Strukturverteilung der Probe verfälscht wird.

Bei der erfindungsgemäßen Verwendung der Röntgenkleinwinkelstreuung spielen Stäube und Verunreinigungen nur eine untergeordnete Rolle. Ein möglicherweise durch Verunreinigungen erzeugtes Streusignal würde in dem Bereich liegen, der durch den Primärstrahlfänger herausgefiltert wird.

Das erfindungsgemäße Verfahren zeichnet sich vor allem durch eine kurze Messzeit und damit durch einen hohen Probendurchsatz aus. Dies ist vor allem für die industrielle Anwendung im Bereich der High-through-put-Verfahren von großer Bedeutung. Erfindungsgemäß ist die Messzeit der Analyse einer Fraktion kleiner als 10 Sekunden, vorzugsweise kleiner als 1 Sekunde und nur durch die Schnelligkeit des Detektors limitiert. Weiterhin von Vorteil ist es, dass die Proben zur Analyse direkt in Lösung gemessen werden können, ohne dass es einer weiteren Probenvorbereitung bedarf.

Als Nanopartikel sind im Sinne der Erfindung anorganische und organische Materialien und Komposite aus beiden, synthetische und natürliche Materialien und Komposite aus beiden, insbesondere Proteine und deren Komposite mit den vorgenannten Materialien zu verstehen. Dabei weisen die Nanopartikel vorzugsweise eine Größe von 1 bis 300 nm, vorzugsweise von 1 bis 100 nm und besonders bevorzugt von 1 bis 50 nm auf.

Kurze Beschreibung der Figuren

Figur 1A zeigt eine schematische Darstellung der erfindungsgemäßen Vorrichtung.

Figur 1B zeigt schematisch die Funktionsweise der Feldfluss-Fraktionierung.

Figur 2 zeigt eine Guinier-Anpassung von Röntgenkleinwinkelstreuungsdaten für verschieden Partikelfraktionen.

Figur 3 zeigt die Trägheitsradien und die Streuintensität von Nanopartikeln als Funktion der Fraktionierungszeit.

Figur 4 zeigt Kurvenanpassungen von Röntgenkleinwinkelstreuungsdaten mittels Zylinderstreufunktionen.

Figur 5 zeigt die Radien und Längen der zylindrischen Nanopartikel als Funktion der Fraktionierungszeit.

Figur 6 zeigt einen Vergleich der Analyse einer fraktionierten Nanopartikelprobe mittels UV-Detektion oder Röntgenkleinwinkelstreuung.

Figur 7 zeigt die Häufigkeitsverteilung der Nanozylinder als Funktion der Volumina und ihrer Massen.

Im Folgenden soll die Erfindung anhand von Ausführungsbeispielen näher erläutert, aber nicht darauf beschränkt werden.

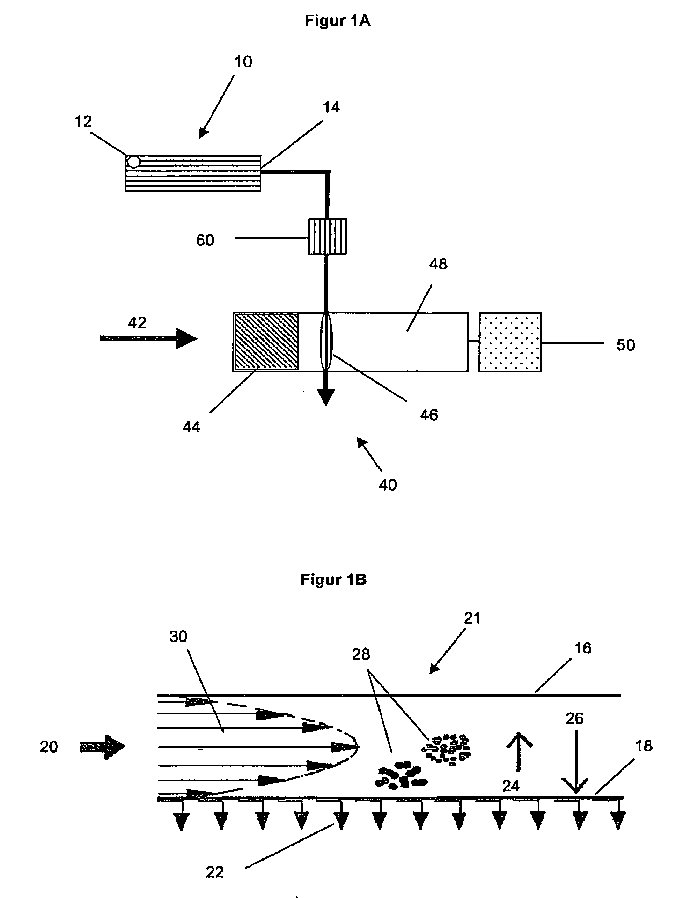

Figur 1A zeigt eine schematische Darstellung einer erfindungsgemäßen Vorrichtung. Eine Einrichtung zur Feldfluss-Fraktionierung 10 ist mit einer Einrichtung zur Röntgenkleinwinkelstreuung 40 verbunden. Die Fraktionierung der Nanopartikel erfolgt in der Einrichtung zur Feldfluss-Fraktionierung 10, die hier als asymmetrische Einrichtung zur Feldfluss-Fraktionierung 10 ausgelegt ist, durch einen Querfluss 22, der einem Hauptfluss der Strömung, einem Trägerstrom 20, im Kanal überlagert ist. Das Trennungsprinzip ist schematisch in Figur 1 B gezeigt und wird später genauer erläutert. Die zu analysierende Probe wird durch einen Probeninjektor 12 aufgetragen und getrennt. Die Nanopartikel verlassen die Einrichtung zur Feldfluss-Fraktionierung 10 nach hydrodynamischen Größen fraktioniert, und zwar in der Reihenfolge kleine, mittlere und große Partikel. Von einem Fraktionsauslass 14 wird der Fluss mit den fraktionierten Nanopartikeln durch einen UV-Detektor 60 geführt und mittels UV-Absorption bei einer Wellenlänge von 300 nm detektiert. Anschließend erreicht der Fluss eine als Messkammer ausgestaltete Durchflusskapillare 46 der Einrichtung zur Röntgenkleinwinkelstreuung 40. Die Durchflusskapillare 46 ist in einer Vakuumkammer 48 positioniert. Zur Analyse der Nanopartikel wird ein Synchrotronstrahl 42 durch einen Spaltkollimator 44 auf die Durchflusskapillare 46 fokussiert. Die Streuintensität der Probe wird mittels eines Detektors 50 aufgenommen. Die Verzögerung zwischen der Detektion im UV-Detektor 60 und der Analyse in der Einrichtung zur Röntgenkleinwinkelstreuung 40 beträgt ca. 140 s. Die Detektionszeit in der Einrichtung zur Röntgenkleinwinkelstreuung 40 beträgt 1 s.

In Figur 1 B ist das Trennprinzip der asymmetrischen Feldfluss-Fraktionierung schematisch gezeigt. Charakteristisch für die asymmetrischen Feldfluss-Fraktionierung ist die Trennung der Nanopartikel nach ihren Diffusionskoeffizienten. Der Trägerstrom 20 strömt mit einem parabolischen Flussprofil durch einen Separationskanal 21. Die Nanopartikel 28 werden in den Separationskanal 21 injiziert und darin fraktioniert. Dabei transportiert das parabolische Geschwindigkeitsprofil des Trägerstroms 20 die Partikel entlang des Separationskanals 21 in Richtung des Fraktionsauslasses 14. Die Separation der Partikel erfolgt durch einen zweiten Querfluss 22 der senkrecht zu dem Trägerstrom 20 strömt. Dieser Querfluss 22 verlässt den Kanal durch eine Ultrafiltrationsmembran, die eine semipermeable Kanalunterseite 18 des Separationskanals 21 bildet. Eine Kanaloberseite 16 des Separationskanals 21 ist nicht permeabel. Durch den Querfluss 22 wirkt auf die Probenpartikel eine Querkraft 26 in Richtung der semipermeablen Kanalunterseite 18. In entgegengesetzter Richtung wirkt eine Diffusionskraft 24 auf die Probenpartikel. Bei kleineren Probenpartikeln ist die Diffusionskraft 24 größer als bei größeren Partikeln, so dass kleinere Probenpartikel in der Mitte des Separationskanals 21 und größere am unteren Rand des Separationskanals 21 fokussiert werden. Auf Grund des parabolischen Strömungsprofils des Trägerstroms 20 werden kleine Partikel somit schneller transportiert und daher zuerst eluiert, gefolgt von den größeren in der Reihenfolge abnehmender Diffusionskoeffizienten. Die Retentionszeit $t_r$ ist gegeben durch Gleichung (1),

$$t_r = \frac{t_0 v_c w^2}{6 D V_0}, \qquad\qquad (1)$$

wobei $t_0$ die Retentionszeit des Lösungsmittels, $v_c$ die Querflussrate, Vo das Volumen im Kanal, w die Dicke des Kanals und D der Diffusionskoeffizient der separierten Nanopartikel ist.

Beispiel 1: Herstellung von Nanopartikeln

Maghämit Nanopartikel wurden in Anlehnung an eine bekannte Fällungsmethode nach Bee A. et al. hergestellt (Bee A et al., Journal of Magnetism and Magnetic Materials, 149 (1-2), 6-9, 1995). Dabei kam ein Mikromixer mit zwei Einlässen für Flüssigkeitsströme zum Einsatz (IMM GmbH, Mainz, Deutschland). Der erste Strom war eine Mischung in wässriger Lösung aus $Fe(II)Cl_2$ $4H_2O$ und $Fe(III)Cl_3$ $6H_2O$ (beide Fluka, Deutschland) mit einem molaren Verhältnis von 2:1 von Fe(III) zu Fe(II) mit einem Gesamtgehalt an Eisen von 0,13 mol $L^{-1}$ (7,1 g $L^{-1}$). Carboxydextran (Meijto Sangyo Co. Ltd., Japan) wurde mit einem Gewichtsverhältnis von Eisensalzen zu Carboxydextran von 1:3 zugefügt. Der zweite Strom bestand aus 25 % wässriger Ammoniumhydroxidlösung. Flüssigkeitsstrom eins und zwei wurden im Volumenverhältnis von 19 zu 1 gemischt. Beim Zusammentreffen beider Flüssigkeitsströme bilden sich Magnetit Nanopartikel, die in Gegenwart von Sauerstoff innerhalb einiger Tage zu Maghämit Nanopartikeln oxidiert werden, wie mößbauerspektroskopische Untersuchungen an vergleichbaren Proben zeigten (Thunemann A. F. et al., Langmuir 2006, 22, (5), 2351-2357). Carboxydextran dient als polymerer Stabilisator zur Vermeidung von Aggregation, und verleit derartigen Nanopartikeln sowohl Langzeitstabilität als auch Biokompatibilität.

Beispiel 2: Analyse der Nanopartikel mit dynamischer Lichtstreuung

Die Messungen wurden mit einem Malvern Particle Sizer Instrument (Zetasizer Nano ZS, Malvern Instruments, UK) durchgeführt, ausgerüstet mit einem He-Ne-Laser ($\lambda$ = 632,8 nm). Die Streudaten wurden bei 298 K im Rückstreumodus bei einem Streuwinkel von $2\theta$ = 173° aufgenommen. Dies entspricht einem Streuwinkel von q = $4\pi n$ / $\lambda sin\theta$ (0,02636 $nm^{-1}$). Die wässrige Dispersion wurde in 10 × 10 mm Einmalküvetten aus Polystyrol gegeben. Vor der Messung erfolgte eine Filtration der Proben durch einen 0,45 $\mu$m Spritzenvorsatzfilter zur Abtrennung von möglicherweise vorhandenen Staubpartikeln. Der hydrodynamische Radius $R_h$ (einer hydrodynamisch äquivalenten Kugel) wurde aus dem ermittelten Diffusionskoeffizienten mittels der Stokes-Einstein-Relation $R_h$ = kT / ($6\pi\eta D$) bestimmt. Dabei wurde die Viskosität des Wasser $\eta$ = 0,9387 mPa und eine Temperatur von 296 K eingesetzt.

Die im Beispiel 1 präparierten Nanopartikel wurden mittels dynamischer Lichtstreuung analysiert. Der intensitätsgewichtete hydrodynamische Radius beträgt $R_h$ = 9,8 nm mit einem Polydispersitätsindex von PDI = 0,15. Der volumengewichtete hydrodynamische Radius beträgt 6,3 nm. Damit sind Größen und PDI vergleichbar mit Partikeln die mittels Batchprozess im Stand der Technik hergestellt wurden (Bee A et al., Journal of Magnetism and Magnetic Materials, 149 (1-2), 6-9, 1995). Im Sinne der ISO Norm 13321 für die Dynamische Lichtstreuung handelt es sich bei einem PDI größer 0,1 bereits um breit verteilte Nanopartikel. Somit sind die erhaltenen Ergebnisse mit einem gewissen Unsicherheitsfaktor belegt. Zudem liefert die Dynamische Lichtstreuung keine Informationen über die Gestalt der Nanopartikel sowie lediglich eine grobe Vorstellung der Größenverteilung.

Beispiel 3: Analyse der Nanopartikel mit einer Kombination aus Feldfluss-Fraktionierung und Röntgenkleinwinkelstreuung

Die Fraktionierung mittels eines Feldfluss-Fraktionierungsverfahrens liefert Nanopartikel mit einer engen Größenverteilung, die ideal für eine Analyse mittels Röntgenkleinwinkelstreuung ist. Dies wird online mittels einer Durchflusszelle 46 und intensiver Synchrotronstrahlung 42 in einer Vorrichtung gemäß Figur 1A durchgeführt.
Als Einrichtung zur Feldfluss-Fraktionierung 10 wurde die A4F-Anlage zur asymmetrischen Feldfluss-Fraktionierung von Postnova Analytics GmbH (Deutschland), mit einem AF 2000 Fokus-System (PN 5200 Proben Injektor, PN 7505 Inline-Entgaser, PN 1122 tip and focus pump) verwendet. Zur Untergrundreduzierung wurde zwischen Focus-Pumpe und Kanal ein inline Lösungsmittelfilter (100 nm, degenerierte Cellulose, Postnova) geschaltet. Die Dicke des Separationskanals 21 betrug 500 Mikrometer, die Ultrafiltrationsmembran auf der semipermeablen Kanalunterseite 18 bestand aus einer regenerierten Zellulosemembran mit einer Ausschlussgrenze von $10 \times 10^3$ g mol$^{-1}$. Die Detektor-Flussrate, d.h. die Flussrate des Trägerstroms 20, betrug 0,5 mLmin$^{-1}$.
Die Querflussrate wurde mit der AF2000 Software (Postnova Analytics) gesteuert. Der Querfluss 22 wurde linear mit der Zeit reduziert, beginnend mit einem Querfluss 22 von 2,5 mLmin$^{-1}$, der mit einer Rate von 2,5/70 mLmin$^{-2}$ reduziert wurde. Die Proben enthielten Nanopartikel in einer Konzentration von 0,71 Gewichts-% an Eisen, entsprechend 1,0 Gewichts-% an Maghämit. Es wurde jeweils ein Probenvolumen von 0,02 mL in die A4F 10 injiziert. Der Fraktionsauslass 14 der A4F 10 war direkt mit einem UV-Detektor 60, an dem die Detektion bei einer Wellenlänge von 300 nm erfolgte, und der Durchflusszelle 46 der Röntgenkleinwinkelstreuungsanlage 40 verbunden. Der Partikelstrom mit den fraktionierten Partikeln erreichte den UV-Detektor 60 ca. zwei Minuten bevor er die Durchflusszelle 46 der Röntgenkleinwinkelstreuungsanlage 40 durchströmte.
Röntgenkleinwinkelstreuungsmessungen wurden an der Messtrecke BAMline am Berliner Elektronensynchrotron (BESSY, Berlin, Deutschland) mit einer Anlage vom Kratky-Typ (SAXSess von Anton Paar, Österreich) durchgeführt. Die SAXSess zeichnet sich durch einen geringen Probe-Detektor-Abstand aus und besitzt eine Spaltfokusgeometrie. Die gemessenen Intensitäten wurden durch Abzug des Streubeitrags der mit Wasser gefüllten Kapillare korrigiert. Der Streuvektor ist in Abhängigkeit des Streuwinkels und der Wellenlänge $\lambda$ der verwendeten Röntgenstrahlung ($\lambda$ = 0,154 nm) definiert. Es gilt q = $4\pi$ / $\lambda \sin(\theta/2)$.
Der Einfluss des spaltförmigen Kollimationssystems 44 auf die Streukurven wurde durch Entfaltung mittels Software (SAXS-Quant Software, Version 2.0, Anton Paar) berücksichtigt.

Beispiel 4: Auswertung der Röntgenkleinwinkelstreuungsdaten

Die Streuung von im Beispiel 1 hergestellten Nanopartikeln wurde im Zeitintervall zwischen 330 s und 1130 s beobachtet. Die Streuintensität von Nanopartikeln in verdünnter Lösung kann bei kleinen q-Werten durch eine Guinier-Approximation ausgewertet werden. Guinier hat gezeigt, dass die Streuintensität von Nanopartikeln exponentiell abnimmt und durch den Streumassenradius $R_g$ charakterisiert werden kann (Guinier, A., X-Ray Diffraction in Crystals, Imperfect Crystals, and Amorphous Bodies. Dover Publications, INC.: New York, 1994). Üblicherweise wird die Approximation linearisiert gemäß Gleichung (2) zur Bestimmung von $R_g$ und der Intensität bei q = 0 verwendet.

$$\ln\left[I(q)\right] = \ln\left[I(0)\right] - \tfrac{1}{3} R_g^2 q^2 \qquad (2)$$

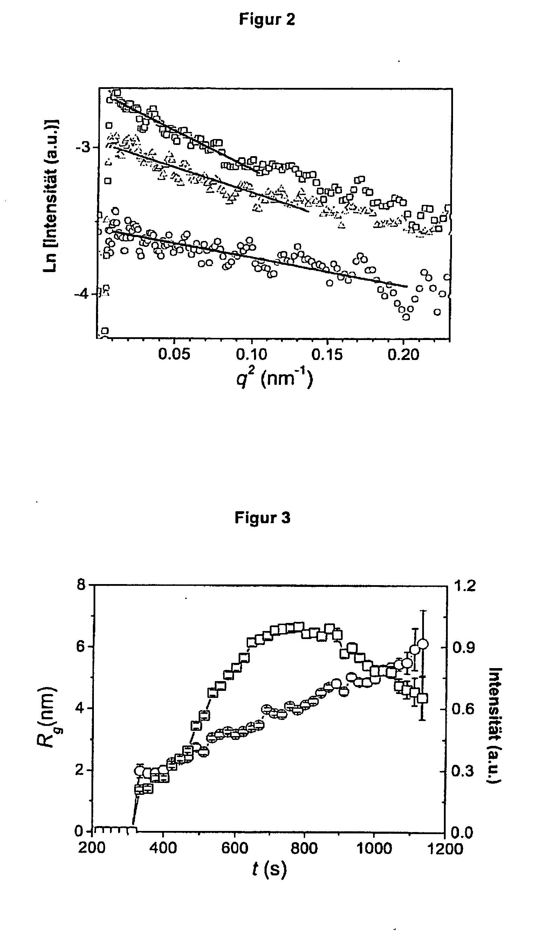

Der ln[I(q)] einer experimentellen Streukurve wird hierbei als Funktion von $q^2$ dargestellt. Sofern sich eine Gerade an die Daten anpassen lässt, ist die Steigung dieser Geraden gleich $\tfrac{1}{3} R_g^2$ und der Schnittpunkt mit der Ordinate ist gleich ln[I(0)]. Zu beachten ist, dass die Guinier-Approximation nur für kleine Werte von q $R_g$ anwendbar ist. In der Praxis werden zuverlässige Anpassungen für Werte im q-Bereich von q $R_g$ < 1,3 beobachtet (Svergun, D.I. und Koch, M. H. J., Reports on Progress in Physics 2003, 66, (10), 1735-1782). Für die Guinier-Approximationen in diesem Beispiel wurde der q-Bereich so gewählt, dass q $R_g$ ≤ 1,2 ist. Figur 2 zeigt exemplarisch Guinier-Anpassungen (durchgezogene Linien) für Röntgenkleinwinkelstreuungsdaten für t = 444 s, ($R_g$ = 2,42 nm, Kreise), t = 644 s ($R_g$ = 3,39 nm, Dreiecke) und t = 778 s ($R_g$ = 4,13 nm, Quadrate).
Figur 3 zeigt einen Überblick über die derart bestimmten Trägheitsradien (Kreise) und Röntgenkleinwinkelstreuungsintensitäten I(0) (Quadrate, aus der Extrapolation nach q = 0 mittels der Guinier-Approximation) als Funktion der Fraktionierungszeit. Der Übersichtlichkeit halber ist nur jeder zehnte Datenpunkt dargestellt. Erkennbar ist, dass die ersten und kleinsten Nanopartikel bei t = 330 s ($R_g$ = 1,97 nm) detektiert werden. Das Maximum der Intensität findet sich bei Partikeln mittlerer Größe bei 770 s ($R_g$ = 3,96 nm). Die größten Partikel werden bei 1130 s ($R_g$ = 6,11 nm) nachgewiesen.

Beispiel 5: Bestimmung der Morphologie der Nanopartikel

Die Guinier-Approximation ist für eine große Zahl an Röntgenkleinwinkelstreuungsdaten einfach zu handhaben, erlaubt aber keine direkte Aussage über die Gestalt der Nanopartikel. Eine etablierte Methode zur Bestimmung der Partikelgestalt ist das Anpassen von Modelfunktionen an die experimentellen Streukurven. Eine detaillierte Übersicht dazu wurde z. B. von Pedersen erstellt (Pedersen, J. S., Advances in Colloid and Interface Science 1997, 70, 171-210). Die Streuintensität für verdünnte Nanopartikel ist durch den Formfaktor P(s) gegeben. Im vorliegenden Beispiel liegen die Nanopartikel bereits bei Injektion in die Einrichtung zur Feldfluss-Fraktionierung 10 in verdünnter Form vor (Eisengehalt von 7,1 g/L). Sie werden durch die Fraktionierung um einen Faktor von etwa 100 auf einen Eisengehalt von ca. 0,07g/L weiter verdünnt.

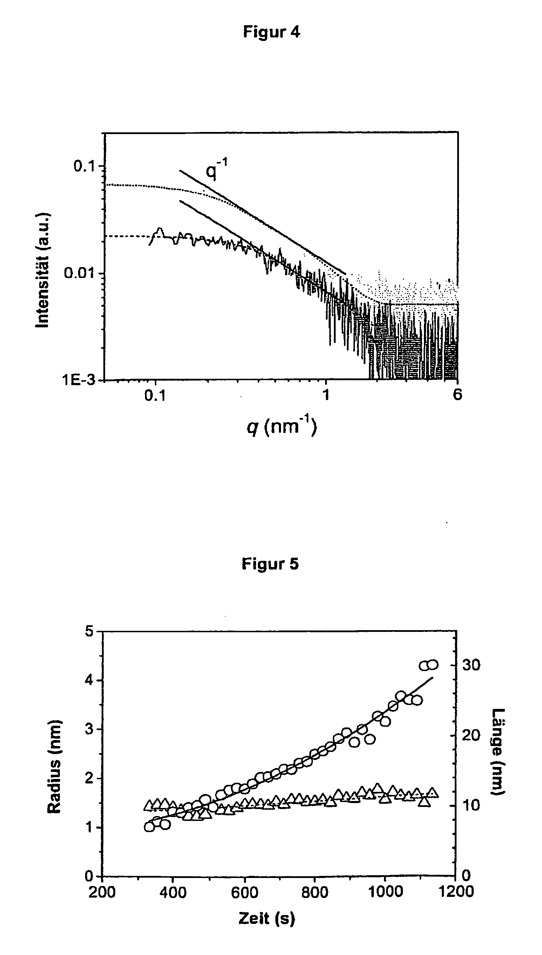

Figur 4 zeigt die Röntgenkleinwinkelstreuungskurven von zwei Fraktionen von Nanopartikeln. Die untere Kurve, in schwarz dargestellt, zeigt die Streuintensitäten der Partikelfraktion bei 444 s, die obere graue Kurve zeigt die Streuintensitäten der Partikelfraktion bei 777 s. Die Messzeit für eine Streukurve betrug 1 s. Die Streuintensität der Messungen skaliert mit $q^{-1}$ im mittleren q-Bereich im Bereich von 0,5< q < 1,0 nm$^{-1}$, wie durch die Geraden in der doppelt logarithmischen Darstellung gezeigt wird. Dieser Verlauf ist typisch für zylindrische und stäbchenförmige Nanopartikel. Daher erfolgt die Anpassung der Streukurven mittels eines Zylindermodells. Die Streuintensität eines Zylinders mit dem Radius R und der Länge L ist gegeben durch Gleichung (3) (Pedersen, J. S., Advances in Colloid and Interface Science 1997, 70, 171-210)

$$I(q) = \frac{k(\rho - \rho_s)^2}{V} \int_0^{\pi/2} \left[ \frac{2J_1(qR\sin\alpha)}{qR\sin\alpha} \frac{\sin(\frac{1}{2}qL\cos\alpha)}{\frac{1}{2}qL\cos\alpha} \right]^2 \sin\alpha \, d\alpha, \qquad (3)$$

wobei k ein Skalierungsfaktor ist, $\rho$ und $\rho_s$ die Elektronendichte vom Zylinder und Wasser sind und V das Zylindervolumen ist. In diesem Fall wird die Elektronendichte des Zylinders als konstant angenommen. Es ergeben sich R = 1,22 nm und L = 9,87 nm für die Fraktion bei t = 444 s (Figur 4, gestrichelte Linie) sowie R = 1,52 nm und L = 16,43 nm für die Fraktion bei t = 777 s (Figur 4, gepunktete Linie). Die Anpassungen mittels des Zylindermodells weisen eine hohe Übereinstimmung mit den Messkurven auf. Besonders zu beachten ist die hohe Datenqualität für die geringe Messzeit von 1 s.

Die sich aus der Kurvenanpassung ergebenden Zylinderradien (linke Ordinate) und Zylinderlängen (rechte Ordinate) sind zusammen als Funktion der Fraktionierungszeit in Figur 5 dargestellt. Die Fehlerbalken sind hier kleiner als die Größe der Symbole und daher nicht darstellbar. Es ist zu erkennen, dass die Zylinderradien zwischen 1,2 nm und 1,7 nm variieren. Der geringe Anstieg der Radien (Dreiecke) mit der Zeit ist näherungsweise linear und lässt sich durch eine Gerade der Formel R(t) = 1,19 nm + 4,3 x 10$^{-4}$ nm s$^{-1}$ x t (gestrichelte Linie) anpassen. Im Gegensatz zu den Radien nimmt die Länge (Kreise) der Zylinder mit der Fraktionierungszeit stark zu. Die geringste Länge beträgt 7 nm bei t = 333 s, die größte 30 nm bei t = 1133 s. Die Zunahme der Zylinderlängen ist durch ein Polynom zweiter Ordnung beschreibbar als L(t) = 5,55 nm + 1,78 x 10$^{-3}$ nm s$^{-1}$ x t + 1,61 x 10$^{-5}$ nm s$^{-2}$ x t$^2$ (Figur 5, durchgezogene Linie).

Beispiel 6: Vergleich der Analyseergebnisse mittels UV-Detektion und Röntgenkleinwinkelstreuung

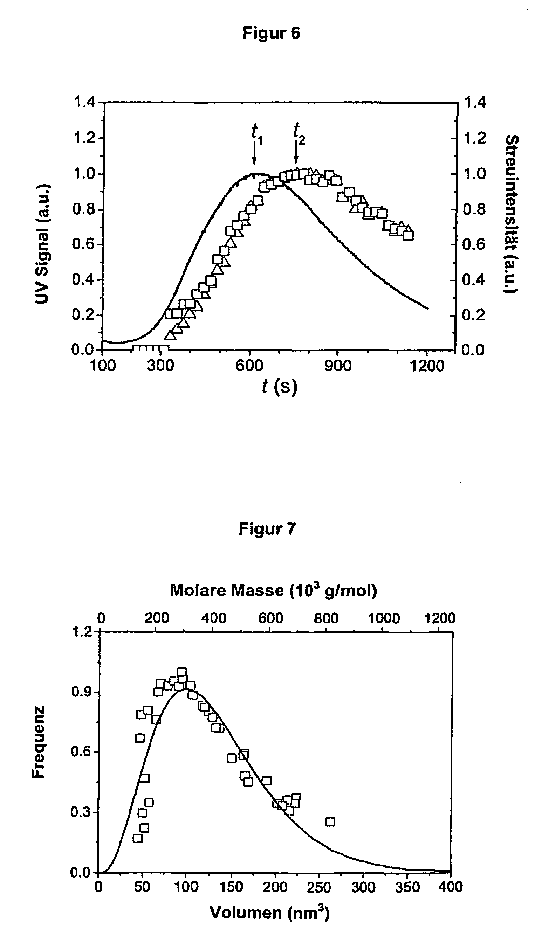

Die Größenverteilung von Nanopartikeln ist von großem analytischen Interesse, insbesondere bei der Beurteilung der Qualität der Nanopartikel, ihres Risikopotentials sowie zur systematischen Verbesserung ihrer Herstellung. Die am weitesten verbreitete Detektionsmethode für die Feldfluss-Fraktionierung ist die UV-Detektion, welche schnell und preiswert im Online-Verfahren eingesetzt werden kann aber keinerlei Strukturinformation liefert. Figur 6 zeigt die Ergebnisse der Messung der UV-Absorption eines Fraktiogramms von superparamagnetischen Nanopartikeln bei einer Wellenlänge von 300 nm (linke Ordinate, durchgezogene Linie). Das gleiche Fraktiogramm wurde mittels Röntgenkleinwinkelstreuung untersucht. Die Streuintensitäten sind ebenfalls in Figur 6 gezeigt (rechte Ordinate). Die Streuintensitäten wurden mittels der Guinier-Anpassung (Quadrate) und aus den Skalierungsfaktoren der Kurvenanpassungen an das Zylindermodell mittels Gleichung (3) (Dreiecke) ermittelt. Das Maximum des UV-Signals liegt bei $t_1$ = 610 s, das der Streuintensität bei $t_2$ = 750 s. Die Maxima sind auf eins normiert. Zu erkennen ist, dass die Form der Kurve der UV-Absorption und die der Streuintensität als Funktion der Zeit sehr ähnlich sind. Der wesentliche Unterschied besteht in einer zeitlichen Verzögerung zwischen den Maxima der UV- und den Röntgenkleinwinkelstreuungskurven. Die Ursache für die Differenz zwischen $t_2$ und $t_1$ liegt in der Zeit begründet, die der Flüssigkeitsstrom benötigt, um vom UV-Detektor 60 (erstes Detektorsystem) zur Einrichtung für die Röntgenkleinwinkelstreuung 40 (zweites Detektorsystem) zu gelangen.

Beispiel 7: Bestimmung der Verteilung der Volumina und molaren Massen der Nanopartikel

Aus bekannten Streuintensitäten, Nanozylinderradien und Nanozylinderlängen kann die Volumenverteilung der Nanopartikel berechnet werden. Darüber hinaus ist es möglich, die Verteilung der molaren Massen zu bestimmen, indem das Volumen mit der Festkörperdichte von Maghämit (4,89 g cm$^{-3}$) und der Avogadrokonstante multipliziert werden. Figur 7 zeigt die Ergebnisse der Berechnung der Volumenverteilung (untere X-Achse) und der Verteilung der molaren Massen (obere X-Achse). Es ist zu erkennen, dass die kleinsten Nanopartikel ein Volumen von 45 nm$^3$ besitzen und ca. 1650 Eisenatome enthalten. Ihre molare Masse beträgt M = 1,4 $\times$ 10$^5$ g mol$^{-1}$. Das Maximum in der Volumenverteilung befindet sich bei einem Volumen von 97 nm$^3$. Dies entspricht 3560 Eisenatomen und einer molaren Masse von M = 3,0 $\times$ 10$^5$ g mol$^{-1}$. Die größten Nanozylinder besitzen ein Volumen von 263 nm$^3$ und enthalten 9640 Eisenatome (M = 8,2 $\times$ 10$^5$ g mol$^{-1}$). Die ermittelte Anzahl an Eisenatomen stellt eine obere Grenze dar, da davon ausgegangen werden kann, dass die Dichte von Maghämit in den Nanozylindern niedriger ist als im ausgedehnten Festkörper. Eine große Zahl an Atomen liegt im Falle der Nanozylinder an der Partikeloberfläche, was zu einer Reduzierung der Dichte führt. Genauere Werte für die Bestimmung der molaren Massen lassen sich gemäß Orthaber et al. ermitteln (Orthaber, D. et al., O., Journal of Applied Crystallography 2000, 33, 218-225).

Zur quantitativen Beschreibung der Volumenverteilung eigenen sich unterschiedlichste Verteilungsfunktionen, die jeweils für das spezifische Problem angepasst werden müssen. Hier eignet sich die Schulz-Zimm-Verteilung in der Form von Gleichung (4) zur quantitativen Beschreibung,

$$h_2(V) = \frac{(z+1)^{z+1} V^z}{\langle V \rangle^{z+1} \Gamma(z+1)} \exp\left[ -(z+1)\frac{V}{\langle V \rangle} \right] \qquad (4)$$

wobei $\langle V \rangle$ das mittlere Volumen ist. Die Standardabweichung $\sigma = (z+1)^{-1/2}$ bestimmt die Breite der Verteilung. Figur 7 zeigt die entsprechende Kurvenanpassung nach der Schulz-Zimm-Verteilung (durchgezogene Linie). Der Median des Volumens der Nanopartikel beträgt 99 $\pm$ 3 nm$^3$ und die Breite beträgt $\sigma = 0,50$.

Bezugszeichenliste

| | |
|---|---|
| 10 | Einrichtung zur Feldfluss-Fraktionierung |
| 12 | Probeninjektor |
| 14 | Fraktionsauslass |
| 16 | nicht-permeable Kanaloberseite |
| 18 | semipermeable Kanalunterseite |
| 20 | Trägerstrom |
| 21 | Separationskanal |
| 22 | Querfluss |
| 24 | Diffusionskraft |
| 26 | Querkraft |
| 28 | Probenpartikel |
| 30 | paraboles Strömungsprofil |
| 40 | Einrichtung zur Röntgenkleinwinkelstreuung |
| 42 | Synchrotronstrahl |
| 44 | Spaltkollimator |
| 46 | Durchflusskapillare |
| 48 | Vakuumkammer |
| 50 | Detektor |
| 60 | UV-Detektor |

**Patentansprüche**

1. Verfahren zur Analyse von Nanopartikeln umfassend:

   kontinuierliche Fraktionierung der zu analysierenden Nanopartikel mittels Feld-Fluss-Fraktionierung (10) in Abhängigkeit ihrer Partikelgröße,
   kontinuierliches Zuführen der fraktionierten Nanopartikel für eine daran anschließende kontinuierliche Analyse der Nanopartikel mittels Röntgenkleinwinkelstreuung (40), umfassend die Schritte:

   Kollimieren von Röntgenstrahlung mittels eines Spaltkollimators (44) auf die zu analysierenden, fraktionierten Nanopartikel, und
   Analysieren der Nanopartikel unter Verwendung eines Detektor-Probenabstandes von weniger als 50 cm.

2. Verfahren nach Anspruch 1, wobei zur Analyse der Nanopartikel Parameter umfassend Größe, Masse, Form, Anzahl, stoffliche Zusammensetzung, innere Struktur und/oder Beschichtung untersucht werden.

3. Verfahren nach einem der Ansprüche 1 oder 2, wobei Wechselwirkungen zwischen den Nanopartikeln analysiert werden.

4. Verfahren nach einem der Ansprüche 1 bis 3, wobei als Röntgenstrahlung, monochromatische Röntgenstrahlung mit einer Photonenenergie von 5 keV bis 80 keV, vorzugsweise, von 8 keV bis 15 keV, besonders bevorzugt Synchrotronstrahlung verwendet wird.

5. Verfahren nach einem der Ansprüche 1 bis 4, wobei die Messzeit der Analyse einer Fraktion kleiner als 10 Sekunden, vorzugsweise kleiner als 1 Sekunde ist.

6. Verfahren nach einem der Ansprüche 1 bis 5, wobei ein Material der Nanopartikel ausgewählt ist aus anorganischen und organischen Materialien und Kompositen aus beiden, aus synthetischen und natürlichen Materialien und Kompositen aus beiden, insbesondere aus Proteinen und deren Kompositen mit den vorgenannten Materialien.

7. Verfahren nach einem der Ansprüche 1 bis 6, wobei die Nanopartikel eine Größe von 1 bis 300 nm, vorzugsweise 1 bis 100 nm und besonders bevorzugt 1 bis 50 nm aufweisen.

8. Vorrichtung zur Analyse von Nanopartikeln umfassend:

   eine Einrichtung zur Feld-Fluss-Fraktionierung (10) der Nanopartikel in Abhängigkeit ihrer Partikelgröße, und eine nachgeschaltete Einrichtung zur Analyse der Nanopartikel, wobei die Einrichtung zur Analyse eine Einrichtung zur Messung von Röntgenkleinwinkelstreuung (40) ist, die einen Spaltkollimator (44) aufweist und die zur kontinuierlichen Zuführung und Analyse der fraktionierten Nanopartikeln direkt mit der Einrichtung zur Feld-Fluss-Fraktionierung (10) verbunden ist,
   wobei ein Detektor-Proben-Abstand in der Einrichtung zur Messung von Röntgenkleinwinkelstreuung (40) kleiner als 50 cm ist.

9. Vorrichtung nach Anspruch 8, wobei die Einrichtung zur Messung der Röntgenkleinwinkelstreuung (40) eine als Messkammer ausgestaltete Durchflusskapillare (46) aufweist.

10. Vorrichtung nach einem der Ansprüche 8 oder 9, wobei die Einrichtung zur Messung von Röntgenkleinwinkelstreuung (40) ein Mittel zur Monochromatisierung von Röntgenstrahlen, vorzugsweise einen Goebelspiegel aufweist.

11. Vorrichtung nach einem der Ansprüche 8 bis 10, wobei zwischen der Einrichtung zur Fraktionierung und der Einrichtung zur Messung von Röntgenkleinwinkelstreuung ein UV-Detektor (60) positioniert ist.

**Claims**

1. A method for analysing nanoparticles, comprising:

   continuous fractionation of the nanoparticles to be analysed by means of field-flow fractionation (10) depending on their particle size,
continuous feeding of the fractionated nanoparticles for a subsequent continuous analysis of the nanoparticles by means of small-angle X-ray scattering (40), comprising the steps of:

collimating X-radiation by means of a slit collimator (44) onto the fractionated nanoparticles to be analysed, and
analysing the nanoparticles using a detector-sample distance of less than 50 cm.

2. A method according to claim 1, wherein parameters including the size, mass, shape, number, material composition, internal structure and/or coating are examined for analysing the nanoparticles.

3. A method according to any one of claims 1 or 2, wherein interactions between the nanoparticles are analysed.

4. A method according to any one of claims 1 to 3, wherein monochromatic X-radiation with a photon energy from 5 keV to 80 keV, preferably from 8 keV to 15 keV, more preferably synchrotron radiation, is used as X-radiation.

5. A method according to any one of claims 1 to 4, wherein the measuring time of the analysis of a fraction is less than 10 seconds, preferably less than 1 second.

6. A method according to any one of claims 1 to 5, wherein a material of the nanoparticles is selected from inorganic and organic materials and composites of both, from synthetic and natural materials and composites of both, particularly from proteins and their composites with the aforesaid materials.

7. A method according to any one of claims 1 to 6, wherein the nanoparticles have a size from 1 to 300 nm, preferably 1 to 100 nm, and more preferably 1 to 50 nm.

8. A device for analysing nanoparticles, comprising:

an appliance for field-flow fractionation (10) of the nanoparticles depending on their particle size, and
a downstream appliance for analysing the nanoparticles, wherein the appliance for analysing is an appliance for measuring small-angle X-ray scattering (40), which comprises a slit collimator (44) and which is directly connected to the appliance for field-flow fractionation (10) for the continuous feeding and analysing of the fractionated nanoparticles,
wherein a detector-sample distance in the appliance for measuring small-angle X-ray scattering (40) is smaller than 50 cm.

9. A device according to claim 8, wherein the appliance for measuring small-angle X-ray scattering (40) comprises a flow capillary (46) that is designed as a measuring chamber.

10. A device according to any one of claims 8 or 9, wherein the appliance for measuring small-angle X-ray scattering (40) comprises a means for monochromatizing X-rays, preferably a Goebel mirror.

11. A device according to any one of claims 8 to 10, wherein a UV detector (60) is positioned between the appliance for fractionation and the appliance for measuring small-angle X-ray scattering.

**Revendications**

1. Procédé d'analyse de nanoparticules, comprenant :

le fractionnement continu des nanoparticules à analyser au moyen du fractionnement par champ d'excitation (10) en fonction de leur taille de particule,
la fourniture continue des nanoparticules fractionnées pour une analyse continue qui la suit des nanoparticules par dispersion de rayons X d'angle miniature (40), comprenant les étapes suivantes :

la collimation des rayons X au moyen d'un collimateur à fente (44) sur les nanoparticules fractionnées à analyser, et
l'analyse des nanoparticules avec utilisation d'une distance détecteur-échantillon inférieure à 50 cm.

**2.** Procédé selon la revendication 1, des paramètres comprenant la taille, la masse, la forme, le nombre, la composition matérielle, la structure interne et/ou le revêtement étant étudiés pour l'analyse des nanoparticules.

**3.** Procédé selon une des revendications 1 ou 2, des interactions entre les nanoparticules étant analysées.

**4.** Procédé selon une des revendications 1 à 3, le rayonnement X monochromatique avec une énergie photonique de 5 keV à 80 keV, de préférence de 8 keV à 15 keV, de façon particulièrement préférée le rayonnement synchrotron, étant utilisé en tant que rayonnement X.

**5.** Procédé selon une des revendications 1 à 4, le temps de mesure de l'analyse d'une fraction étant inférieur à 10 secondes, de préférence inférieur à 1 seconde.

**6.** Procédé selon une des revendications 1 à 5, un matériau des nanoparticules étant sélectionné parmi des matériaux inorganiques et organiques et des composites de ces deux matériaux, parmi des matériaux synthétiques et naturels et des composites de ces deux matériaux, en particulier parmi des protéines et leurs composites avec les matériaux précités.

**7.** Procédé selon une des revendications 1 à 6, les nanoparticules présentant une taille de 1 à 300 nm, de préférence de 1 à 100 nm, et de façon particulièrement préférée de 1 à 50 nm.

**8.** Dispositif d'analyse de nanoparticules, comprenant :

un équipement de fractionnement par champ d'excitation (10) des nanoparticules en fonction de leur taille de particule, et
un équipement, monté en aval, d'analyse des nanoparticules, l'équipement d'analyse étant un équipement de mesure de la dispersion de rayons X d'angle miniature (40) qui présente un collimateur à fente (44) et qui est raccordé directement à l'équipement de fractionnement par champ d'excitation (10) pour la fourniture continue et l'analyse des nanoparticules fractionnées,
une distance détecteur-échantillon dans l'équipement de mesure de la dispersion de rayons X d'angle miniature (40) étant inférieure à 50 cm.

**9.** Dispositif selon la revendication 8, l'équipement de mesure de la dispersion de rayons X d'angle miniature (40) présentant un capillaire à écoulement (46) constitué en tant que chambre de mesure.

**10.** Dispositif selon une des revendications 8 ou 9, l'équipement de mesure de la dispersion de rayons X d'angle miniature (40) présentant un moyen de monochromatisation des rayons X, de préférence un miroir de Goebel.

**11.** Dispositif selon une des revendications 8 à 10, un détecteur UV (60) étant positionné entre l'équipement de fractionnement et l'équipement de dispersion de rayons X d'angle miniature.

EP 2 279 404 B1

Figur 1A

Figur 1B

14

## Figur 2

## Figur 3

## Figur 4

## Figur 5

## Figur 6

## Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FRISKEN, B. J.** *Applied Optics,* 2001, vol. 40 (24), 4087-4091
- **FRAUNHOFER W. et al.** *Anal. Chem.,* 2004, vol. 76 (7), 1909-1920
- **MATHEW et al.** *J. Synchrotron Rad.,* 2004, vol. 11, 314-318
- **BEE A et al.** *Journal of Magnetism and Magnetic Materials,* 1995, vol. 149 (1-2), 6-9

- **THUNEMANN A. F. et al.** *Langmuir,* 2006, vol. 22 (5), 2351-2357
- **SVERGUN, D.I. ; KOCH, M. H. J.** *Reports on Progress in Physics,* 2003, vol. 66 (10), 1735-1782
- **PEDERSEN, J. S.** *Advances in Colloid and Interface Science,* 1997, vol. 70, 171-210
- **ORTHABER, D. ET AL., O. et al.** *Journal of Applied Crystallography,* 2000, vol. 33, 218-225